Europäisches Patentamt

European Patent Office

Office européen des brevets

(11) Publication number: **0 352 033**
**A2**

(12) **EUROPEAN PATENT APPLICATION**

(21) Application number: 89307159.7

(51) Int. Cl.⁴: **C03B 23/03 , C03B 27/04**

(22) Date of filing: 14.07.89

(30) Priority: 18.07.88 JP 94893/88

(43) Date of publication of application:
24.01.90 Bulletin 90/04

(84) Designated Contracting States:
BE DE ES FR GB IT SE

(71) Applicant: NIPPON SHEET GLASS CO. LTD.
5-11, Dosho-machi 3-chome
Chuo-ku Osaka-shi Osaka(JP)

(72) Inventor: Mizusugi, Tetsuya c/o Nippon Sheet
Glass Co., Ltd.
5-11, Dosho-machi 3-chome Chuo-ku
Osaka-shi Osaka(JP)
Inventor: Yoshizawa, Hideo c/o Nippon Sheet
Glass Co., Ltd.
5-11, Dosho-machi 3-chome Chuo-ku
Osaka-shi Osaka(JP)

(74) Representative: Broome, Geoffrey Edward et
al
Barlin House 20 High Street
Carshalton Surrey SM5 3AG(GB)

(54) Improvements in or relating to the moulding of tempered glass.

(57) The present invention provides a mould for for-
ming tempered sheet glass in which a heat insulating material is bonded to a forming surface of the
mould, and jet holes for cooling air are bored
through the heat insulating material, characterised in
that a part of said forming surface (3) which is used
for deeply curving glass sheets includes a rib-like
projection (12) covered with said heat insulating ma-
terials (5).

**FIG.1**

EP 0 352 033 A2

## IMPROVEMENTS IN OR RELATING TO THE MOULDING OF TEMPERED GLASS

The present invention relates to a mould for forming tempered sheet glass particularly, but not exclusively, such glass as used as window glass of automobiles.

(Prior Art)

Press apparatus of the type which forms such sheet glass and immediately tempers it by quick cooling at the same stage is known for example from Japanese Patent Publication No 58140333. As shown in Fig 5 of the accompanying drawings, the known apparatus has hollow moulds 100, 101 the interiors of which communicate with a pressurized air source, and has heat insulating materials 102, 103 bonded to forming surfaces of the respective moulds. Jet holes 104, 105 are provided on the forming surfaces of both the moulds and the heat insulating materials for blowing cooling air to the surfaces of sheet glass G after pressing.

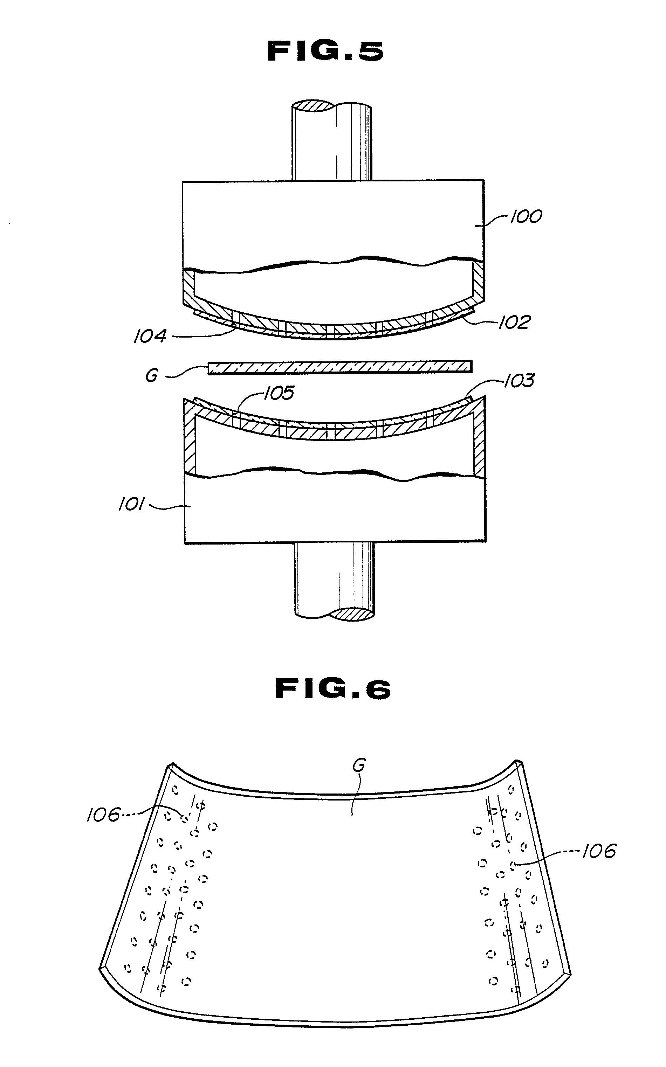

When a sheet of glass is formed using the above-mentioned press apparatus, the moulds engage the sheet glass intensively over any deeply-curved portion that is to say a portion having a small radius of curvature and the time in contact is comparatively long. As a result, the jet holes 104, 105 bored in the heat insulating materials 102, 103 leave some traces on the product, and the difference in temperature between the part of the jet holes 104, 105 and the surrounding area causes a difference in a degree of heat contraction. This produces pitted optical distortions 106, which are noticeable from the outside, at the deeply-curved portions of the sheet glass G as shown in Fig 6 of the accompanying drawings. It is an object of the present invention to alleviate such problems.

Accordingly the present invention provides that a part of the forming surface of such a mould which is used for deeply curvous sheet glass includes a rib-like projection, the projection being covered by the heat insulating material, and that jet holes for cooling air bored through the heat insulating material are positioned to be clear of the rib-like projection.

In use of the mould during the initial period of bending, only that part of the heat insulating material which is separated by the rib-like projection contacts the glass at the deeply-curved portion, and the peripheral part of the heat insulating material surrounding the rib-like projection is held away from the glass. As a result no optical distortion occurs as would otherwise be caused by the cooling air jet holes.

(Embodiment)

In order to promote a fuller understanding of the above and other aspects of the invention, an embodiment will now be described, by way of example only, with reference to Figs 1,2,3 and 4 of the accompanying drawings in which:

Figure 1 shows a schematic cross-section of a glass forming press with moulds.

Figure 2 shows a perspective view from below of the male mould of Figure 1, and

Figures 3 and 4 show detail cross-sections of the cooperation of the male and female moulds of Figure 1 at two stages of operation.

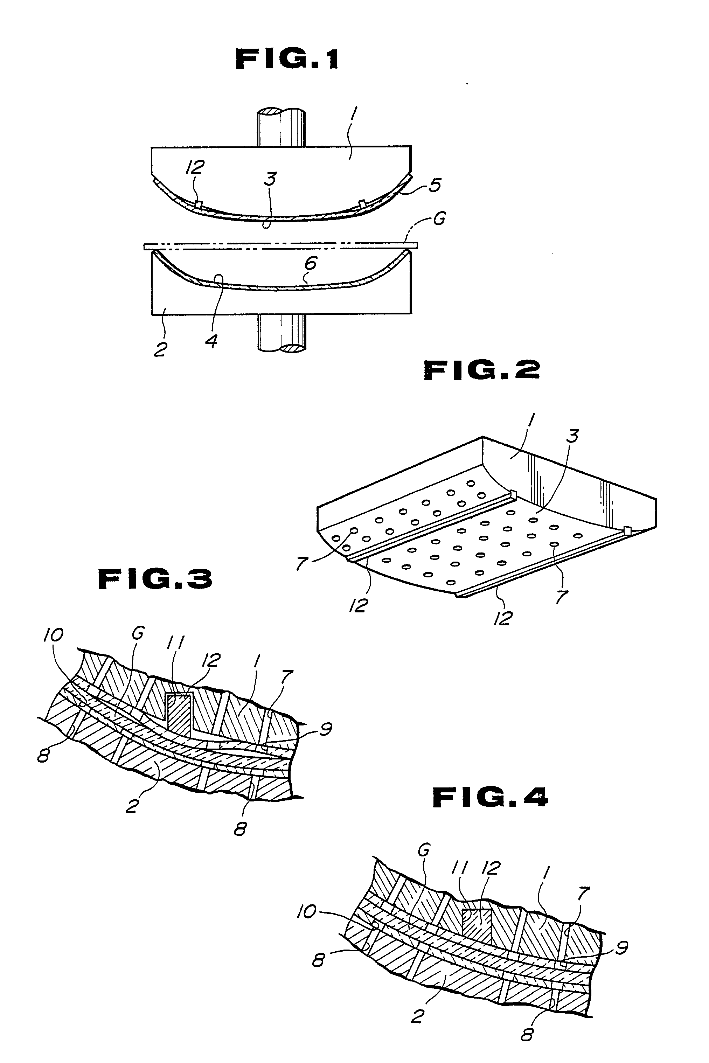

Figure 1 shows a press in which a mould embodying the present invention is used. The press comprises a male convex mould 1 and a female or concave mould 2, and heat insulating materials 5, 6 of about 4 mm thick are bonded to forming surfaces 3, 4 of the convex mould 1 and the concave mould 2, respectively.

The convex mould 1 and the concave mould 2 are each in the form of a hollow metal housing and have their interiors connected to a pressurized air source. As will be seen from Figs 2 and 3, jet holes 7, 8 for cooling air are bored in the forming surfaces 3, 4 and jet holes 9, 10 are bored through the heat insulating materials 5, 6 at positions aligned with the jet holes 7, 8 in one-to-one relation.

As shown in Fig 2, along each brow of the deeply curved portion in the forming surface 3 of the male or convex mould 1, a groove 11 is formed extending across the whole width of the forming surface 3, and a rib-like projection 12 is seated in the groove 11. The grooves 11 measure 5-10 mm wide and about 10 mm deep. The rib-like projections 12 are made of an elastic material with rubber hardness in a range of 30-50 (JIS K 6301), such as neoprene or chloroprene rubber, for example. The rib-like projections 12 measure 5-10 mm wide and 11-12 mm high such that their top ends in their free state projects out of the forming surface 3 where it is seated in the groove 11.

Further, the cooling air jet holes 9 are disposed in positions clear of the groove 11 and the rib-like projections 12. A glass sheet G is formed using the thus-constructed press apparatus as follows. At the initial stage of the pressing operation, as shown in Fig 3, the insulating material 5 is held off the forming surface 3 by the rib-like projection 12, so that the cooling air jet holes 9 lie apart away from the glass sheet 6 on the concave side of the deeply-curved portions of the glass sheet 6. As a result, no pitted optical distortion occurs, which would otherwise be caused by the cooling air jet holes 9.

Then, at the final stage of the pressing operation, as shown in Fig 4, the rib-like projections 12, being made of an elastic material, are compressed by the glass sheet G, so that the top surfaces of the rib-like projections 12 lie in flush with the forming surface 3 and the glass sheet G is formed with a high degree of accuracy.

It should be mentioned that at the deeply-curved portion of the formed glass sheet, the male convex mould presses against the formed sheet more intensively than the female concave mould and hence the formed sheet is more likely to suffer the pitted optical distortions on the concave side thereof. For this reason, the rib-like projections 12 are provided on the male convex mould 1 alone in the illustrated embodiment. But, the rib-like projections may be provided on the forming surface of the female concave mould 2 as well.

Furthermore, although the above embodiment has been described as forming and cooling the sheet glass at the same stage, the present invention is also applicable to apparatus of type that the stage of bending is separate from the stage of cooling.

In the embodiment of the invention, as described above, since in the process of forming glass sheet, the cooling air jet holes in the heat insulating material bonded to the forming surface of the mould are not pushed against the deeply-curved portions (small radius portions) of the glass sheet at the initial stage of pressing, it becomes possible to prevent the occurrence of any pitted optical distortions which would otherwise be caused by the cooling air jet holes. Instead, the pressing load acts on the sheet glass concentratedly at the part thereof resting on the rib-like projections, thereby causing slight rib-like optical distortion. But, this rib-like distortion is narrower in its range as compared with the previous pitted distortion, and can be restrained within a negligible extent by forming the rib-like projections of an elastic material as described.

## Claims

1. A mould for forming tempered sheet glass in which a heat insulating material is bonded to a forming surface of the mould, and jet holes for cooling air are bored through the heat insulating material, characterised in that a part of said forming surface (3) which is used for deeply curving glass sheets includes a rib-like projection (12) covered with said heat insulating material (5).

2. A mould according to claim 1, characterised in that said rib-like projection is made of an elastic material.

3. A mould according to claim 1 or 2, characterised in that said jet holes (7) for cooling air are positioned clear of said rib-like projection.

4. A mould according to claim 1, characterised in that said part provided with a rib-like projection is a convex part.

5. A mould assembly comprising male and female moulds, the male mould of which is according to any one of Claims 1 to 4.

6. A mould assembly as claimed in claim 5, the female mould of which is according to any one of claims 1 to 3.

**FIG.1**

**FIG.2**

**FIG.3**

**FIG.4**

# FIG.5

# FIG.6